# EUROPEAN PATENT SPECIFICATION

(11) **EP 1 787 055 B1**
(45) Date of publication and mention of the grant of the patent: **03.06.2009**
(21) Application number: 04768456.8
(22) Date of filing: 11.09.2004
(51) Int. Cl.: F16L 47/03, B29C 65/34

(54) **ELECTROFUSION COUPLER**
ELEKTROSCHWEISSMUFFE
RACCORD A SOUDER PAR ELECTROFUSION

(43) Date of publication of application: 23.05.2007
(73) Proprietor: Glynwed Pipe Systems Ltd, Kent, TN13 1SD (GB)
(72) Inventor: ROBERTS-MOORE, Paul Clive, Durapipe UK, Norton Canes, Staffordshire WS11 9NS (GB); BULL, Michael, Durapipe UK, Norton Canes, Staffordshire WS11 9NS (GB); 0'DEA, Dennis, Durapipe UK, Norton Canes, Staffordshire WS11 9NS (GB)
(74) Representative: Scott, Fiona Penelope Elaine
(86) International application number: PCT/GB2004/003910
(87) International publication number: WO 2006/027535

(56) References cited:
- WO-A-01/20219
- GB-A- 2 318 543

## Description

This invention relates to the secondary containment of pipes, for example pipes used in pipeline systems for conveying petrol or other flammable hydrocarbons, in order to minimise the risk of leakage to the environment surrounding the pipeline.

It is known, where fluids which may cause ecological damage if exposed to the natural environment are conveyed through a pipeline, to contain the main conveying pipe within a second pipe. Should there be a failure of the main conveying pipe, then any fluid escaping from the damaged pipe is contained by the outer pipe. This provision of a second, outer pipe is known as secondary containment.

In order to ensure that any leakages are contained a number of improvements to the basic secondary containment systems have been made. These include, the introduction of an inert gas, for example Nitrogen, into the interstitial space. The pressure of the gas can be monitored and any unexpected changes in the pressure can provide an indication of failure of the primary (conveying) pipe. Repairs can then be initiated, without delay, so as to minimise any loss of the conveyed fluid and any subsequent risk of environmental contamination. If the gas introduced is at an elevated pressure, the pressure of the gas itself can help contain fluid in the primary pipe in the event of a pipe failure.

Manufacture of a secondary containment pipeline is relatively straightforward for a straight line. The primary (or fluid conveying) pipe I is inserted into a secondary containment pipe of greater diameter. However, the task becomes more complex when there is a need to include bends, tee junctions, elbow joints and the like to convey the fluid from its source to its final destination. Such joints or bends are typically moulded. It should be understood that to provide an interstitial space for secondary containment of a fluid within a moulded joint or bend is a complex manufacturing problem.

Mechanical joints for secondary containment pipe sections are known US 5,934,712 describes a coupling used to form a mechanical joint between secondary containment pipe sections. The coupling comprises coaxial inner and outer spigots that are joined to corresponding inner and outer pipes of the secondary containment pipe sections. The inner diameter of the inner spigot of the fitting is substantially the same as that of the inner pipe of the secondary containment pipe. Due to manufacturing constraints, the inner diameter of the outer spigot of the fitting is much larger than the outer diameter of the outer pipe of the secondary containment pipe section. The outer spigot of the fitting is therefore provided with a reducer to facilitate the connection of outer pipes of differing diameters to the fitting. The inner and outer pipes of the secondary containment pipe are secured to the fitting and reducer respectively through the use of screw-threaded fixings, elastomeric seals and O-rings. US 6,626,467 B1 and US 6,170,891 B1 also disclose joints for secondary containment pipe sections. Seals are formed through the use of adhesives, interlocking threads and O-rings.

A further, similar, joint is disclosed in EP 0580799A. Secondary containment pipe sections are secured in place through the use of butt welding techniques.

WO 01/20219 A discloses a generic electrofusion coupling for joining together two or more sections of pipe comprising inner and outer welding sockets. The inner welding socket comprises a substantially cylindrical body having an outer surface and an inner surface, the inner surface being sized and shaped to form a clearance fit, with the outer surface of the pipe regions to be joined. The inner surface of the welding socket includes electrical windings typical of most welding sockets. The external diameter of the socket is only slightly less than the internal diameter of the secondary pipe. This means that the inner welding socket provides a close sliding fit with the outer welding socket thereby facilitating the formation of an effective joint. Spring loaded depressable contacts ensure that the outer welding socket is centrally located over the inner welding socket.

A common feature of many of the foregoing joints for secondary containment pipe sections is the presence of an outer pipe of larger diameter and consequently a large interstitial space, since manufacturing techniques were unable to provide for secondary containment pipes having an outer pipe with a diameter only very slightly larger than that of the inner pipe and consequently a smaller interstitial space. As a result the disparity in size between the outer pipe of the pipe section and that of the joints meant that the use of a reducer was required in order to "bridge" the gap. However, the use of reducers means that, relatively speaking, there was a large number of components associated with each joint and as a consequence a large number of sealing steps was required for assembly of the joint.

In an attempt to reduce the number of components associated with a secondary containment joint and simplify the installation of the joint, the use of a coupler that is able to join secondary containment pipe sections together in a single welding step has been proposed in EP 1062454 B1 and EP 1,004,810 B1. Both documents disclose a joint for a secondary containment pipe section. The joint comprises a single walled body comprising a seat on its internal surface as well as a channel passing therethrough. The arrangement of the seat on the inner surface of the body means that both the inner and outer pipes of the secondary containment pipe sections can be secured in position to the inner surfaces of the body by electrofusion welding. The presence of the channel within the body means that the continuity of the interstitial space between the separate secondary contained pipe sections is maintained along the length of the pipe as a whole and through the joints. Although pipe joints of this type facilitate the union of secondary containment pipe sections in a quick and simple manner, without the need for reducers, the single walled nature of the joint means that if any rupture or failure should occur within the walls of the joint leakage of fluid contained within the pipe system will inevitably occur due to the single walled nature of the joint. There is a need, therefore, for a joint for a secondary containment pipe system, which is easy to manufacture, where the diameter of the outer part of the joint is comparable with that of the inner joint and which is able to contain leakage of fluid from the inner pipe should failure or rupture of the inner pipe wall occur. The present invention addresses those needs.

A first aspect of the invention provides a secondary containment pipe joint, for joining the ends of the inner and outer pipes of a secondary containment pipe section, the joint comprising:
a primary electrofusion fitting including a mouth portion of larger diameter and an intermediate portion of smaller diameter, the mouth portion being adapted to receive the outer diameter of the inner pipe;
a secondary fitting having a wall which has an inner surface, which surrounds and is in contact with the primary electrofusion fitting and an outer surface and is provided with a channel or gap between said inner and outer surfaces characterised in that the secondary fitting is structurally independent of the primary electrofusion fitting and in use the secondary fitting is secured to the outer pipe of the secondary contained pipe section via the intermediary of an electrofusion reducer, the configuration of the pipe-joint assembly being such as to maintain the interstitial gap between the inner and outer pipes of the secondary contained pipe sections to be joined.

Optionally, the secondary fitting further comprises a flange extending between and formed integrally with said first and second layers thereby to provide a bridge between the first and second layers.

The secondary fitting is formed over the primary electrofusion fitting by moulding techniques thereby to facilitate the intimate contact of the inner surface of the secondary fitting with an outer surface of the primary electrofusion fitting. It should be appreciated that the secondary fitting is not (chemically) bonded or fused to the primary electrofusion fitting as a result of the moulding process and the primary and secondary fittings within the joint are therefore structurally independent of each other. This means that the joint is a truly secondary contained electrofusion fitting. If the wall section of our primary electrofusion fitting were to fail, the contents would leak into, and travel between, the interface between the primary and secondary fittings. Because the interstitial gap is monitored, as and when the conditions within this interstitial gap are seen to change (due to leakage of the primary pipework system), measures can be instigated to locate and repair the leak without the risk of contaminating the surrounding ground soil.

The mouth of the secondary fitting axially extends beyond that of the primary electrofusion fitting. The mouth, provided by the inner surface of the secondary fitting, is coincident with the mouth of the primary electrofusion fitting.

In use the secondary containment pipe joint is provided with electrofusion reducers on the outer surface of the second layer to bridge the gap between the outer surface of the secondary fitting surrounding the mouth and the outer surface of the outer pipe of the joint.

The primary electrofusion fitting is provided with heating elements to facilitate the electrofusion welding of the inner pipe of the secondary contained pipe section to the primary electrofusion fitting of the joint.

Two secondary contained pipe sections can therefore be joined as follows using the joint of the first aspect of the invention. The inner pipe of a secondary contained pipe section is inserted into the mouth of the primary electrofusion fitting and is secured in position using electrofusion welding techniques. An electrofusion reducer is then assembled at its first end to the outer diameter of secondary fitting and then at its second end to the outer diameter of the secondary pipe. The ends are then secured in place using standard electrofusion jointing techniques. It will be appreciated that the use of the joint of the invention having a channel within the wall of the secondary fitting ensures that the interstitial space between the inner and outer pipes is maintained along all sections of the secondary contained pipe. In addition, the goal of secondary containment of the primary electrofusion fitting is achieved due to the presence of the overmoulded secondary fitting. The primary fitting is fully encapsulated by the over-moulded secondary fitting but, at the same time, exists completely separately from the other so that each maintains its own features and characteristics totally independently of the other. Although the primary and secondary fittings are in are in very close proximity to each other, the surfaces of each are distinct and separate from each other.

The electrofusion joints of the first aspect of the invention can be readily formed using pre-form moulding techniques that are well known to a person skilled in the art. The use of such moulding techniques achieves the goal of secondary containment of the primary electrofusion fitting by virtue of over-moulding using an injection moulding process. In addition, the use of the over-moulding process facilitates the manufacture of electrofusion joints, in which the diameter of the outer secondary fitting is not significantly dissimilar to that of the inner primary fitting thereby ensuring that the size of the interstitial gap along the length of the pipe is not greatly changed in the region of the joints. Tee-joints, elbows and couplers incorporating the features of the first aspect of the invention can be readily and easily prepared using the pre-form moulding techniques referred to above.

A second aspect of the invention therefore provides a method of manufacturing electrofusion joints according to the first aspect of the invention, the method comprising the steps of:
(a) forming a blank pre-form using a dedicated injection mould tool;
(b) winding a coil of resistance wire onto the pre-form;
(c) overmoulding the wound preform of step (b) with a layer of thermoplastic material in a second dedicated injection mould tool to form the finished primary electrofusion fitting;
(d) removing the vertical upstanding shroud and terminal of the primary electrofusion fitting;
(e) treating the outer surface of the primary electrofusion fitting to render it non-adherent to an over-moulded layer;
(f) over-moulding the treated surface of the primary electrofusion fitting with a second outer layer in a third dedicated injection moulding tool, thereby to provide a secondary fitting which surrounds and is in contact with the primary electrofusion fitting, the third dedicated injection moulding tool being configured with cores that create a flow channel within the wall section of the secondary outer layer;
(g) attaching horizontal terminals to the resistance wire of the inner primary fitting thereby to facilitate electrofusion of the inner pipe section to the primary electrofusion fitting of the joint.

The primary electrofusion fitting formed in steps (a -c) above may be of any standard form, for example, but not strictly limited to; an elbow fitting, a tee fitting or a coupler.

If a secondary contained 3-way electrofusion tee fitting is to be formed from a 2-way electrofusion tee incorporating a plain spigot branch using the overmoulding method of the invention, it is necessary not only to remove the upstanding shroud and terminals of the 2-way electrofusion tee but also to replace the plain spigot branch of the tee with an electrofusion spigot converter to create a 3-way electrofusion tee prior to the overmoulding step. The electrofusion spigot converter can be butt welded to the stump created by removal of the plain spigot branch of the tee. As before, it will be necessary to fit horizontal terminals to the wire-wound inner primary fitting thereby to facilitate electrofusion welding of the inner pipe to the inner fitting of the joint.

Removal of the upstanding shroud and terminal of standard electrofusion coupler is also necessary prior to the overmoulding process. However, secondary contained electrofusion couplers can also be formed by sliding a moulded thermoplastic sleeve having an internal diameter equivalent to that of the external diameter of the primary fitting over said primary fitting. As before, the vertical shroud and terminals of the primary fitting are replaced by horizontal terminals so that the inner pipe of the secondary contained pipe section can be fixed or welded to the primary fitting of the joint.

The use of the over-moulding techniques according to the second aspect of the invention facilitate the production of compact secondary contained electrofusion joints.

The technique is not restricted to electrofusion fittings manufactured using the pre-form technology. Secondary contained electrofusion fittings can be produced using all methods of pre-formless technology such as ploughed wire fittings, where the wire is ploughed directly into bore of the fitting body as there is no pre-form.

The inner primary fitting and secondary outer layer are both produced from polyethylene. In order to ensure that the secondary outer layer does not adhere to the inner primary fitting, it is necessary to render the external surface of the primary fitting as inert. This may be achieved through a number of techniques, which include:
a) Chemical modification of the external surface of the material of the primary fitting to reduce its compatibility with the material used to produce the secondary overmoulded fitting.
b) Application of a layer of material to the external surface of the primary fitting that is not compatible with either the material the primary fitting is manufactured from or the material that is used to produce the secondary overmoulded fitting.
c) Application of a pre-formed shell of material around the primary fitting that is not compatible with either the material used to produce the inner primary fitting or the material used to produce the secondary overmoulded fitting.

The invention will now be described with reference to the following nonlimiting drawings in which:
Figure 1 shows a cross-section through an overmoulded coupler.
Figure 2 shows a cross-section through two sections of a secondary contained pipe system joined using the coupler of Figure 1.
Figure 3 shows a cross-section through two sections of a secondary contained pipe system joined using an overmoulded elbow.
Figure 4 shows a cross-section through three sections of a secondary contained pipe system joined using an over-moulded tee.

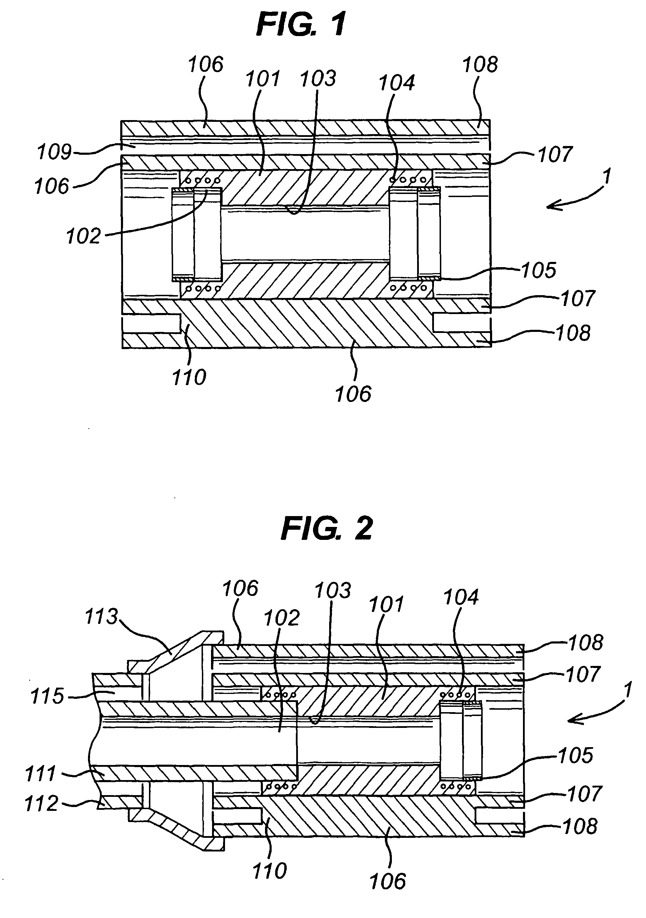

In Figure 1, the coupling 1 comprises a primary electrofusion fitting 101 having a mouth 102 and an intermediate portion 103. The diameter of the mouth portion 102 is larger than that of the intermediate portion 103. The diameter of the mouth portion 102 is approximately equal to the outer diameter of the inner pipe of a secondary contained pipe section which forms a tight, friction sliding fit with said mouth portion. The primary fitting 101 is provided with resistance wires 104 and terminals 105, which facilitate electrofusion welding of the primary fitting to the inner pipe of the secondary contained pipe section. Provided around the primary electrofusion fitting and in intimate contact therewith is a secondary overmoulded fitting 106. The secondary fitting comprises an inner layer 107, which surrounds and is in intimate contact with the primary electrofusion fitting. An outer layer 108 surrounds the inner layer 107, the inner and outer layers together defining a channel or gap 109 therebetween. The secondary fitting 106 is further provided with a flange 110 extending from the inner surface of the outer layer 108 and the outer surface of the inner layer 107 thereby to provide a bridge between the inner 107 and outer 108 layers. Although the secondary fitting 106 surrounds and is in intimate contact with the primary electrofusion fitting 101, the two fittings are each separately formed and are structurally independent of each other, that is to say an interface exists between the surfaces of the primary 101 and secondary 106 fittings and those neighbouring surfaces are not welded or chemically adhered to each other. The separate, independent nature of the primary 101 and secondary 106 fittings means that the coupling is of a truly double walled construction. This means that, should any rupture or failure occur in the walls of the primary electrofusion fitting, such failure is not transmitted to the walls of the secondary fitting 106. Since the walls of the secondary fitting 106 are unaffected by weaknesses in the walls of the primary fitting 101, the secondary fitting 106 is then able to function to contain any leaks that occur through failure of the primary fitting 101.

The primary fitting 101 may be formed from a standard electrofusion fitting from which the upstanding shroud and terminals may have been removed. The primary and secondary fittings are suitably formed from thermoplastic materials such as polyethylene. The outer surface of the primary fitting is generally treated, prior to the overmoulding step to render that surface non-adherent to the material of the secondary fitting. As indicated previously such non-adherence may be achieved by chemical modification or by physical means. Chemical modification may be suitably achieved by low pressure plasma treatment or fluorination which chemically modifies the surface of the primary fitting to form chemical species on the surface which are not compatible with the structure of the over-moulding material. Physical modification may be achieved by applying a layer of a material that is non-compatible with the materials of the primary and secondary fittings to the outer surface of the primary fitting 101. By non-compatible it should be understood to mean that the material does not bind to the surfaces of the primary and secondary fittings. This means that the surfaces of the primary and secondary fittings do not bond together as a result of the overmoulding of the secondary fitting and the resulting joint comprises at least two separate and independent walls along its circumference.

Looking now at Figure 2. A secondary containment pipe section comprising an inner pipe 111 and an outer pipe 112 is secured to the coupling 1 as follows. The inner pipe 111 is received by the mouth 102 of the primary fitting 101. The pipe 111 is welded to the primary fitting by electrofusion welding through the use of heating wires 104. An electrofusion reducer 113 is then welded at one end to the outer surface of the secondary fitting 106 and at the other end to the outer surface of pipe 112. In this way the pipe 112 is secured to the coupling 1, whilst maintaining the interstitial gap 115 between the inner 111 and outer 112 pipes.

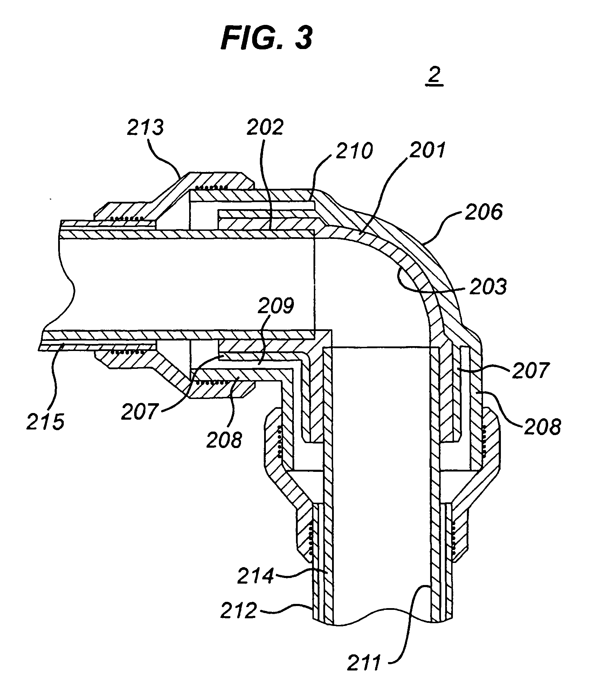

Figure 3 shows an elbow joint according to the first aspect of the invention. The joint 2 comprises a primary electrofusion fitting 201 having a mouth portion 202 and an intermediate portion 203. The diameter of the mouth portion 202 is larger than that of the intermediate portion 203. The diameter of the mouth portion 202 is approximately equal to the outer diameter of the inner pipe 211 of the secondary contained pipe section 214, which forms a tight, friction sliding fit with said mouth portion 202. Provided around the primary electrofusion fitting 201 and in intimate contact therewith is a secondary overmoulded fitting 206. The secondary overmoulded fitting comprises an inner layer 207 which surrounds and is in intimate contact with the primary electrofusion fitting 201. An outer layer 208 surrounds the inner layer 207, the inner and outer layers together defining a channel or gap 209 therebetween. The secondary overmoulded fitting 206 is further provided with a flange 210 extending from the inner surface of the outer layer 208 to the outer surface of the inner layer 207 thereby to provide a bridge between the inner 207 and outer 208 layers. As before, although the secondary overmoulded fitting 206 surrounds and is in intimate contact with the primary electrofusion fitting 201, the two fittings are each separately formed and are structurally independent of each other.

The primary fitting 201 may be formed from standard electrofusion fitting from which the upstanding shrouds and terminals may have been removed. The secondary fitting 206 is formed by overmoulding the primary fitting 201 using a dedicated moulding tool to produce a secondary fitting having a channel extending therethrough. Prior to the overmoulding process, the outer surface of the primary fitting 201 is treated thereby to render it non-adherent to the material of the secondary fitting.

A secondary contained pipe section 214 comprising an inner 211 and an outer pipe 212 is secured to the joint as before. The inner pipe 211 engages the mouth 202 of the primary fitting 201 and is secured in position by electrofusion welding through the use of resistance wires (not shown) embedded around the mouth 202. The outer pipe is secured to the secondary fitting 206 through the use of an electrofusion reducer 213 thereby to maintain the interstitial gap 215 between the inner 211 and outer 212 pipes.

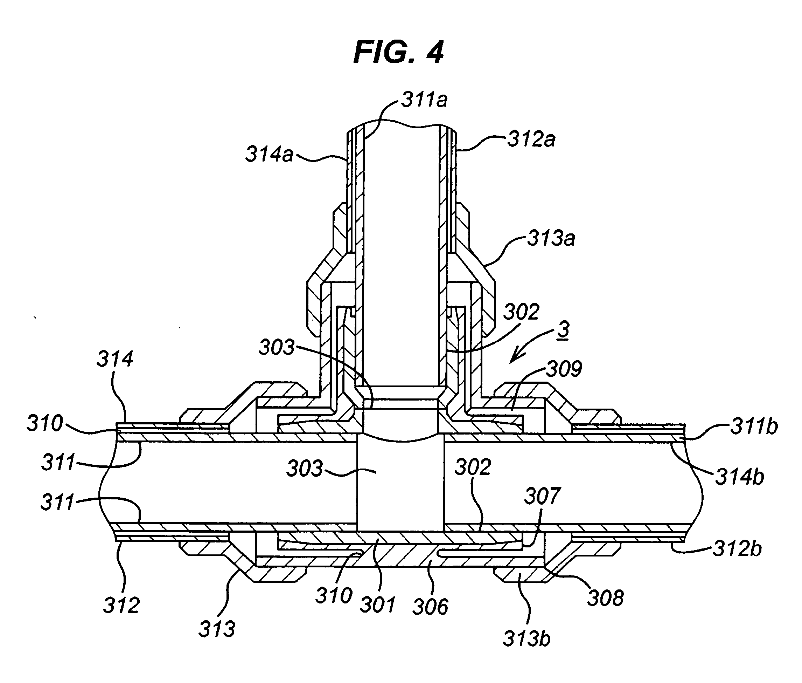

Figure 4 shows a tee joint (coupler) according to the first aspect of the invention. The joint 3 comprises a primary electrofusion fitting 301 having a mouth portion 302 and an intermediate portion 303. The diameter of the mouth portion 302 is larger than that of the intermediate portion 303. The diameter of the mouth portion is approximately equal to the outer diameter of the inner pipe 311 of a secondary contained pipe section 310, which inner pipe forms a tight, frictional sliding fit with the mouth portion 302. Provided around the primary electrofusion fitting 301 and in intimate contact therewith is a secondary overmoulded fitting 306. The secondary fitting comprises an inner layer 307, which surrounds and is in intimate contact with the primary electrofusion fitting 301. An outer layer 308 surrounds the inner layer 307, the inner and outer layers together defining a channel or gap 309 therebetween. The secondary overmoulded fitting 306 is further provided with a flange 310 extending from the inner surface of the outer layer 308 to the outer surface of the inner layer 307, thereby to provide a bridge between the inner 307 and outer 308 layers. As before, although the secondary overmoulded fitting 306 surrounds and is in intimate contact with the primary electrofusion fitting 301, the two fittings are each separately formed and are structurally independent of each other.

The primary fitting 301 may be formed from a standard electrofusion fitting from which the upstanding shrouds and terminals may have been removed. If a 2-way electrofusion tee-fitting incorporating a plain spigot branch is used it is necessary to replace the plain spigot branch of the tee with an electrofusion spigot converter to create a three way electrofusion tee prior to the surface pre-treatment and overmoulding of the secondary fitting.

Three secondary contained pipe sections 314, 314a and 314b comprising inner 311, 311a and 311b pipes and outer pipes 312, 312a and 312b respectively are secured to the three socket ends of the coupling as before. The inner pipes 311, 311a and 311b engage each of the mouths of the three socket ends of the tee respectively. The inner pipes are secured in position by electrofusion welding through the use of resistance wires (not shown) embedded around the mouths 302, 302a and 302b. The outer pipes are secured to the secondary fitting 306 through the use of electrofusion reducers 313, 313a and 313b thereby to maintain the interstitial gap 315 between the inner 311 and outer pipes 312.

## Claims

1. A secondary containment pipe joint (1, 2, 3), for joining the ends of the inner and outer pipes of a secondary containment pipe section, the joint comprising:
a primary electrofusion fitting (101, 201, 301) including a mouth portion (102, 202, 302) of larger diameter and an intermediate portion (103, 203, 303) of smaller diameter, the mouth portion (102, 202, 302) being adapted to receive the outer diameter of the inner pipe;
a secondary fitting (106, 206, 306) structurally independent of the primary electrofusion fitting, the secondary fitting having a wall which has an inner surface (107, 207, 307), which surrounds and is in contact with the primary electrofusion fitting (101, 201, 301) and an outer surface (108, 208, 308) **characterised in that** the secondary fitting is provided with a channel or gap (109, 209, 309) between said inner and outer surfaces and in use the secondary fitting (106, 206, 306) is secured to the outer pipe of the secondary contained pipe section via the intermediary of an electrofusion reducer (113, 213, 313), the configuration of the pipe-joint assembly being such as to maintain the interstitial gap (115, 215, 315) between the inner and outer pipes of the secondary contained pipe sections to be joined.

2. A secondary containment pipe joint according to claim 1, **characterised in that** an interface exists between the primary electrofusion fitting (101, 201, 301) and the secondary fitting (106, 206, 306).

3. A secondary containment pipe joint (1, 2, 3) according to claim 1 or claim 2, **characterised in that** wall of the secondary fitting (106, 206, 306) includes a mouth portion (102, 202, 303) and the outer surface of the mouth portion of the secondary fitting extends, axially, beyond that of the primary electrofusion fitting.

4. A secondary containment pipe joint according to claim 3, where the inner surface of the mouth of the secondary fitting is coincident with the mouth portion (112, 212, 312) of the primary electrofusion fitting.

5. A secondary containment pipe joint according to any one of the preceding claims which further comprises an electrofusion reducer (113, 213, 313) on the outer surface of the mouth portion of the outer layer (108, 208, 308) of the secondary fitting thereby to bridge the gap between the mouth of the outer layer and the outer diameter of the outer pipe of the double containment pipe section.

6. A secondary containment pipe joint according to any one of the preceding claims, which is a coupler.

7. A secondary containment pipe joint according to any one of claims 1 to 5, which is an elbow joint.

8. A secondary containment pipe joint according to any one of claims 1 to 5, which is a tee joint.

9. A method of forming a secondary containment pipe joint according to any one of the preceding claims, the method comprising the steps of:
(a) providing a primary electrofusion fitting (101, 201, 301) having resistance wires (104) provided thereon;
(b) treating the outer surface of the primary electrofusion fitting to render it non-adherent to a secondary fitting (106, 206, 306) overmoulded thereover; and
(c) over-moulding the treated surface of the primary electrofusion fitting with an outer layer in a second injection moulding tool, the second injection moulding tool being configured with cores that create a flow channel (109, 209, 309) within the wall section of the secondary outer layer thereby to form an over-moulding secondary fitting.

10. A method according to claim 9, which further comprises the steps of attaching horizontal terminals to the resistance wires of the inner primary fitting thereby to facilitate electrofusion welding of the inner pipe of the secondary containment pipe section to the primary electrofusion fitting of the joint.

11. A method of forming a secondary containment pipe joint according to any of claims 9 or 10 **characterised in that** the primary electrofusion fitting (101, 201, 301) is formed from a pre-formed blank using a dedicated injection mould tool, the pre-formed blank being provided thereon with a coil of resistance wire.

12. A method of forming a secondary containment pipe joint according to any of claims 9 or 10 **characterised in that** step (a) involves winding a wire onto a blank perform and overmoulding the blank perform with a layer of plastic material thereby to form the primary electrofusion fitting (101, 201, 301).

13. A method according to claim 9 or 10, **characterised in that** the primary electrofusion fitting (101, 201, 301) is formed from a standard electrofusion fitting from which the vertical shrouds and terminals have been removed.

14. A method according to any one of claims 9 to 13 **characterised in that** where the primary electrofusion fitting (301) is a tee-joint the primary electrofusion fitting is formed from a standard electrofusion fitting from which both the vertical shrouds and terminals have been removed and in which the plain spigot has been replaced with an electrofusion converter to create a three-way electrofusion tee.

15. A method of joining the end sections of two or more secondary containment pipe sections the method comprising
(a) inserting the inner pipe (111, 211, 311) of a secondary containment pipe section into the mouth of the primary electrofusion fitting (101, 201, 301) of the joint according to any one of claims 1 to 8
(b) electrofusion welding the primary electrofusion fitting to the inner pipe (111, 211, 311)
(c) providing on the outer surface of the mouth of the secondary fitting (106, 206, 306) of the joint according to any one of claims 1 to 8 with an electrofusion reducer (113, 213, 313) having a first end adapted to receive the outer surface of the mouth and a second end adapted to receive the outer diameter of the end of the outer pipe (112, 212, 312) of the secondary containment pipe section;
(d) inserting the outer pipe (112, 212, 312) of the secondary containment pipe section into the end of the reducer so adapted; and
(e) electrofusion welding the electrofusion reducer respectively and electrofusion welding the electrofusion reducer to the second outer pipe of the secondary containment pipe section and the outer surface of the secondary over-moulded fitting.

16. A method of manufacturing electrofusion joints, the method comprising the steps of:
(a) forming a blank pre-form using a dedicated injection mould tool;
(b) winding a coil of resistance wire onto the pre-form to give a primary electrofusion fitting;
(c) overmoulding the wound preform of step (b) with a layer of thermoplastic material in a second dedicated injection mould tool to form the finished primary electrofusion fitting (101, 201, 301);
(d) removing the vertical upstanding shroud and terminal of the primary electrofusion fitting;
(e) treating the outer surface of the primary electrofusion fitting to render it non-adherent to an over-moulded layer;
(f) over-moulding the treated surface of the primary electrofusion fitting with a second outer layer in a third dedicated injection moulding tool, thereby to provide a secondary fitting (106, 206, 306) which surrounds and is in contact with the primary electrofusion fitting, the third dedicated injection moulding tool being configured with cores that create a flow channel within the wall section of the secondary outer layer;
(g) attaching horizontal terminals to the resistance wire of the inner primary fitting thereby to facilitate electrofusion of the inner pipe section to the primary electrofusion fitting of the joint.

17. A method of forming a secondary containment pipe joint according to claim 9 or 10 **characterised in that** step (a) involves winding wire to form a coil of resistance wire directly into the bore of the mouth portion of the primary fitting produced without a preform.

18. A method of forming a secondary containment pipe joint according to any of claims 9 or 10 **characterised in that** step (a) involves winding a coil of resistance wire directly onto the core that forms the mouth portion of the primary electrofusion fitting and then overmoulding the coil of wire to form the primary electrofusion fitting.

19. A method according to any one of claims 9 to 12, 17 or 18 **characterised in that** the primary electrofusion fitting (301) is a tee joint formed from a standard 3-way electrofusion tee.

20. A method according to any one of claims 9 to 12, 17 or 18 **characterised in that** where the primary electrofusion fitting (101, 201) is a straight coupler, the straight coupler may be inserted into a secondary moulded sleeve having internal spacing ribs having an internal diameter coincident with the external diameter of the primary straight coupler, the moulded sleeve has an outside surface and a flow through channel is developed between the outside surface of the secondary sleeve and the outside surface of the primary straight coupler.

## Patentansprüche

1. Sekundäre Kapselungsrohrverbindung (1, 2, 3), um die Enden eines inneren und eines äußeren Rohres eines sekundären Kapselungsrohrabschnittes zu verbinden, wobei die Verbindung aufweist:
ein primäres Elektroschweißanschlussstück (101, 201, 301) mit einem Mundbereich (102, 202, 302) mit einem größeren Durchmesser und einen dazwischen liegenden Bereich (103, 203, 303) mit einem kleineren Durchmesser, wobei der Mundbereich (102, 202, 302) ausgestaltet ist, den äußeren Durchmesser des inneren Rohres aufzunehmen,
ein sekundäres Anschlussstück (106, 206, 306), das strukturell von dem primären Elektroschweißanschlussstück unabhängig ist, wobei das sekundäre Anschlussstück eine Wand aufweist, die eine innere Oberfläche (107, 207, 307), die das primäre Elektroschweißanschlussstück (101, 201, 301) umgibt und in Kontakt mit ihm ist, und eine äußere Oberfläche (108, 208, 308) aufweist, **dadurch gekennzeichnet, dass** in dem sekundären Anschlussstück ein Kanal oder eine Lücke (109, 209, 309) zwischen der inneren und der äußeren Oberfläche vorgesehen ist und im Gebrauch das sekundäre Anschlussstück (106, 206, 306) mit dem äußeren Rohr des sekundären Kapselungsrohrabschnittes über einen Mittler eines Elektroschweißreduzierstückes (113, 213, 313) gesichert ist, wobei die Anordnung der Rohrverbindung so ausgestaltet ist, dass die in Zwischenräumen liegende Lücke (115, 215, 315) zwischen dem inneren und dem äußeren Rohr der sekundären Kapselungsrohrabschnitte, die verbunden werden sollen, aufrecht erhalten wird.

2. Sekundäre Kapselungsrohrverbindung nach Anspruch 1, **dadurch gekennzeichnet, dass** eine Koppelung zwischen dem primären Elektroschweißanschlussstück (101, 201, 301) und dem sekundären Anschlussstück (106, 206, 306) vorliegt.

3. Sekundäre Kapselungsrohrverbindung (1, 2, 3) nach Anspruch 1 oder 2, **dadurch gekennzeichnet, dass** die Wand des sekundären Anschlussstücks (106, 206, 306) einen Mundabschnitt (102, 202, 302) umfasst und dass die äußere Oberfläche der Mundabschnittes des sekundären Anschlussstücks sich axial hinter das primäre Elektroschweißanschlussstück erstreckt.

4. Sekundäre Kapselungsrohrverbindung nach Anspruch 3, wobei die innere Oberfläche des Mundes des sekundären Anschlussstücks mit dem Mundabschnitt (112, 212, 312) des primären Elektroschweißanschlussstückes übereinstimmt.

5. Sekundäre Kapselungsrohrverbindung nach einem der vorhergehenden Ansprüche, die ferner ein Elektroschweißreduzierstück (113, 213, 313) auf der äußeren Oberfläche des Mundbereiches der äußeren Schicht (108, 208, 308) des sekundären Anschlussstücks aufweist, um **dadurch** die Lücke zwischen dem Mund der äußeren Schicht und dem äußeren Durchmesser des äußeren Rohres des doppelten Kapselungsrohrabschnittes zu überbrücken.

6. Sekundäre Kapselungsrohrverbindung nach einem der vorhergehenden Ansprüche, die ein Kupplungsstück aufweist.

7. Sekundäre Kapselungsrohrverbindung nach einem der Ansprüche 1 bis 5, die ein Bogenstück aufweist.

8. Sekundäre Kapselungsrohrverbindung nach einem der Ansprüche 1 bis 5, die eine T-Verbindung aufweist.

9. Verfahren zur Bildung einer sekundären Kapselungsrohrverbindung nach einem der vorhergehenden Ansprüche, wobei das Verfahren die Schritte aufweist:
(a) ein Bereitstellen eines primären Elektroschweißanschlussstückes (101, 201, 301), das Widerstandsdrähte (104) aufweist, die daran angebracht sind,
(b) ein Behandeln der äußeren Oberfläche des primären Elektroschweißanschlussstückes, um es mit einem sekundären Anschlussstück (106, 206, 306) nicht haftend zu machen, das darüber ausgeformt ist, und
(c) ein Ausformen der behandelten Oberfläche des primären Elektroschweißanschlussstückes mit einer äußeren Schicht in einen zweiten Spritzgießwerkzeug, wobei das zweite Spritzgießwerkzeug mit Kernen ausgestaltet ist, die einen Flusskanal (109, 209, 309) innerhalb des Wandabschnittes der sekundären äußeren Schicht erzeugen, um ein ausgeformtes sekundäres Verbindungsstück zu bilden.

10. Verfahren nach Anspruch 9, das ferner den Schritt aufweist: ein Anbringen horizontaler Anschlüsse an die Widerstandsdrähte des inneren primären Verbindungsstückes, um **dadurch** das Elektroschweißen des inneren Rohres des sekundären Kapselungsrohrabschnittes an das primäre Elektroschweißanschlussstück der Verbindung zu erleichtern.

11. Verfahren zur Bildung einer sekundären Kapselungsrohrverbindung nach einem der Ansprüche 9 oder 10, **dadurch gekennzeichnet, dass** das primäre Elektroschweißanschlussstück (101, 201, 301) aus einem vorgeformten Rohling mit einem zweckbestimmten Spritzgießwerkzeug gebildet wird, wobei der vorgeformte Rohling darauf mit einer Spule eines Widerstanddrahtes versehen wird.

12. Verfahren zur Bildung einer sekundären Kapselungsrohrverbindung nach einem der Ansprüche 9 oder 10, **dadurch gekennzeichnet, dass** der Schritt (a) ein Wickeln eines Draht auf einen Rohlingsformteil und ein Ausformen des Rohlingsformteils mit einer Schicht aus einem Kunststoffmaterial umfasst, wodurch das primäre Elektroschweißanschlussstück (101, 201, 301) gebildet wird.

13. Verfahren nach Anspruch 9 oder 10, **dadurch gekennzeichnet, dass** das primäre Elektroschweißanschlussstück (101, 201, 301) aus einem herkömmlichen Elektroschweißanschlussstück gebildet wird, bei dem die vertikalen Abdeckungen und Anschlüsse entfernt worden sind.

14. Verfahren nach einem der vorhergehenden Ansprüche 9 bis 13, **dadurch gekennzeichnet, dass** das primäre Elektroschweißanschlussstück (301) eine T-Verbindung ist, wobei das primäre Elektroschweißanschlussstück aus einem herkömmlichen Elektroschweißanschlussstück gebildet wird, bei dem sowohl die vertikalen Abdeckungen als auch die Anschlüsse entfernt worden sind und die einfache Muffenverbindung mit einem Elektroschweißumsetzer ersetzt worden ist, um ein Drei-Wege-Elektroschweiß-T zu erzeugen.

15. Verfahren zum Verbinden von Endabschnitten von zwei oder mehr sekundären Kapselungsrohrabschnitten, wobei das Verfahren aufweist:
(a) ein Einfügen des inneren Rohres (111, 211, 311) eines sekundären Kapselungsrohrabschnittes in den Mund des primären Elektroschweißanschlussstückes (101, 201, 301) der Verbindung nach einem der Ansprüche 1 bis 8,
(b) ein Elektroschweißen des primären Elektroschweißanschlussstücks mit dem inneren Rohr (111, 211, 311),
(c) auf der äußeren Oberfläche des Mundes des sekundären Verbindungsstückes (106, 206, 306) der Verbindung nach einem der Ansprüche 1 bis 8 ein Bereitstellen eines Elektroschweißreduzierstückes (113, 213, 313), das ein erstes Ende, das ausgestaltet ist, die äußere Oberfläche des Mundes aufzunehmen, und ein zweites Ende aufweist, das ausgestaltet ist, den äußeren Durchmesser von dem Ende des äußeren Rohres (112, 212, 312) des sekundären Kapselungsrohrabschnittes aufzunehmen,
(d) ein Einfügen des äußeren Rohres (112, 212, 312) des sekundären Kapselungsrohrabschnittes in das Ende des Reduzierstückes, das so ausgestaltet ist, und
(e) jeweils ein Elektroschweißen des Elektroschweißreduzierstückes und ein Elektroschweißen des Elektroschweißreduzierstückes an das zweite äußere Rohr des sekundären Kapselungsrohrabschnittes und an die äußere Oberfläche des sekundären ausgeformten Anschlussstückes.

16. Verfahren zur Herstellung von Elektroschweißverbindungen, wobei das Verfahren aufweist:
(a) ein Bilden eines Rohlingsformteils mit einem zweckbestimmten Spritzgießwerkzeug,
(b) ein Wickeln einer Spule mit einem Widerstandsdraht auf das Formteil, um ein primäres Elektroschweißanschlussstück bereit zu stellen,
(c) ein Ausformen des gewickelten Formteils aus Schritt (b) mit einer Schicht aus einem thermoplastischen Material in einem zweiten zweckbestimmten Spritzgießwerkzeug, um das fertig bearbeitete primäre Elektroschweißanschlussstück (101, 201, 301) zu bilden,
(d) ein Entfernen der vertikal abstehenden Abdeckung und des Anschlusses des primären Elektroschweißanschlussstückes,
(e) ein Behandeln der äußeren Oberfläche des primären Elektroschweißanschlussstückes, um es nicht haftend mit einer ausgeformten Schicht zu machen,
(f) ein Ausformen der behandelten Oberfläche des primären Elektroschweißanschlussstückes mit einer zweiten äußeren Schicht in einem dritten zweckbestimmten Spritzgießwerkzeug, wodurch ein sekundäres Anschlussstück (106, 206, 306) bereit gestellt wird, das das primäre Elektroschweißanschlussstück umgibt und in Kontakt mit ihm ist, wobei das dritte zweckbestimmte Spritzgießwerkzeug mit Kernen ausgestaltet ist, die einen Flusskanal innerhalb des Wandabschnittes der sekundären äußeren Schicht erzeugen, und
(g) ein Anbringen horizontaler Anschlüsse an den Widerstandsdraht des primären Anschlussstückes, um **dadurch** das Elektroschweißen des inneren Rohrabschnittes an das primäre Elektroschweißanschlussstück der Verbindung zu erleichtern.

17. Verfahren zur Bildung einer sekundären Kapselungsrohrverbindung nach einem der Ansprüche 9 oder 10, **dadurch gekennzeichnet, dass** der Schritt (a) ein Wickeln eines Drahtes umfasst, um eine Spule des Widerstandsdrahtes direkt in der Bohrung des Mundbereiches des primären Elektroschweißanschlussstückes zu bilden, der ohne ein Formteil hergestellt worden ist.

18. Verfahren zur Bildung einer sekundären Kapselungsrohrverbindung nach einem der Ansprüche 9 oder 10, **dadurch gekennzeichnet, dass** der Schritt (a) ein Wickeln eines Widerstandsdrahtes direkt auf den Kern, der den Mundbereich des primären Elektroschweißanschlussstückes bildet, und dann ein Ausformen der Drahtspule umfasst, um das das primäre Elektroschweißanschlussstück zu bilden.

19. Verfahren nach einem der Ansprüche 9 bis 12, 17 oder 18, **dadurch gekennzeichnet, dass** das primäre Elektroschweißanschlussstück (301) eine T-Verbindung ist, die aus einer herkömmlichen Drei-Wege-Elektroschweiß-T-Verbindung hergestellt worden ist.

20. Verfahren nach einem der Ansprüche 9 bis 12, 17 oder 18, **dadurch gekennzeichnet, dass** das primäre Elektroschweißanschlussstück (101, 201) ein direktes Kupplungsstück ist, wobei das direkte Kupplungsstück in eine sekundäre ausgeformte Muffe eingefügt werden kann, die innere Abstandsrippen aufweist, die einen inneren Durchmesser aufweisen, der mit dem äußeren Durchmesser des primären direkten Kupplungsstückes übereinstimmt, und dass die ausgeformte Muffe eine äußere Oberfläche aufweist und dass ein Fluss durch einen Kanal zwischen der äußeren Oberfläche der sekundären Muffe und der äußeren Oberfläche des primären direkten Kupplungsstückes entwickelt wird.

## Revendications

1. Joint de conduite de confinement secondaire (1, 2, 3), pour joindre les extrémités des conduites intérieure et extérieure d'une section de conduite de confinement secondaire, le joint comprenant :
un raccord par électrofusion primaire (101, 201, 301) comprenant une partie d'embouchure (102, 202, 302) de diamètre plus important et une partie intermédiaire (103, 203, 303) de diamètre plus petit, la partie d'embouchure (102, 202, 302) étant adaptée pour recevoir le diamètre extérieur de la conduite intérieure ;
un raccord secondaire (106, 206, 306) structurellement indépendant du raccord par électrofusion primaire, le raccord secondaire possédant une paroi qui possède une surface intérieure (107, 207, 307), qui entoure et est en contact avec le raccord par électrofusion primaire (101, 201, 301) et une surface extérieure (108, 208, 308), **caractérisé en ce que** le raccord secondaire est pourvu d'un canal ou espace (109, 209, 309) entre lesdites surfaces intérieure et extérieure et, durant l'utilisation, le raccord secondaire (106, 206, 306) est fixé au tuyau extérieur de la section de conduite contenue secondaire par l'intermédiaire d'un raccord réducteur par électrofusion (113, 213, 313), la configuration de l'ensemble conduite-joint étant telle à maintenir l'espace interstitiel (115, 215, 315) entre les conduites intérieure et extérieure des sections de conduite contenue secondaire destinées à être jointes.

2. Joint de conduite de confinement secondaire selon la revendication 1, **caractérisé en ce qu'**une interface existe entre le raccord par électrofusion primaire (101, 201, 301) et le raccord secondaire (106, 206, 306).

3. Joint de conduite de confinement secondaire (1, 2, 3) selon la revendication 1 ou la revendication 2, **caractérisé en ce que** la paroi du raccord secondaire (106, 206, 306) comprend une partie d'embouchure (102, 202, 303) et la surface extérieure de la partie d'embouchure du raccord secondaire s'étend, de façon axiale, au-delà de celle du raccord par électrofusion primaire.

4. Joint de conduite de confinement secondaire selon la revendication 3, dans lequel la surface intérieure de l'embouchure du raccord secondaire coïncide avec la partie d'embouchure (112, 212, 312) du raccord par électrofusion primaire.

5. Joint de conduite de confinement secondaire selon l'une quelconque des revendications précédentes, qui comprend en outre un raccord réducteur par électrofusion (113, 213, 313) sur la surface extérieure de la partie d'embouchure de la couche extérieure (108, 208, 308) du raccord secondaire pour ainsi combler l'espace entre l'embouchure de la couche extérieure et le diamètre extérieur du tuyau extérieur de la section de conduite de confinement double.

6. Joint de conduite de confinement secondaire selon l'une quelconque des revendications précédentes, qui est un coupleur.

7. Joint de conduite de confinement secondaire selon l'une quelconque des revendications 1 à 5, qui est un joint coudé.

8. Joint de conduite de confinement secondaire selon l'une quelconque des revendications 1 à 5, qui est un joint en T.

9. Procédé pour former un joint de conduite de confinement secondaire selon l'une quelconque des revendications précédentes, le procédé comprenant les étapes suivantes :
(a) fournir un raccord par électrofusion primaire (101, 201, 301) possédant des fils de résistance (104) prévus sur celui-ci ;
(b) traiter la surface extérieure du raccord par électrofusion primaire pour la rendre non adhérente à un raccord secondaire (106, 206, 306) surmoulé pardessus celle-ci ; et
(c) surmouler la surface traitée du raccord par électrofusion primaire avec une couche extérieure dans un deuxième outil de moulage par injection, le deuxième outil de moulage par injection étant configuré avec des centres qui créent un canal d'écoulement (109, 209, 309) à l'intérieur de la section de paroi de la couche extérieure secondaire pour ainsi former un raccord secondaire de surmoulage.

10. Procédé selon la revendication 9, qui comprend en outre les étapes consistant à fixer des bornes horizontales aux fils de résistance du raccord primaire intérieur pour ainsi faciliter le soudage par électrofusion de la conduite intérieure de la section de conduite de confinement secondaire au raccord par électrofusion primaire du joint.

11. Procédé pour former un joint de conduite de confinement secondaire selon l'une quelconque des revendications 9 ou 10, **caractérisé en ce que** le raccord par électrofusion primaire (101, 201, 301) est formé à partir d'une ébauche préformée à l'aide d'un outil de moulage par injection dédié, l'ébauche préformée étant pourvue sur celle-ci d'une bobine de fil de résistance.

12. Procédé pour former un joint de conduite de confinement secondaire selon l'une quelconque des revendications 9 ou 10, **caractérisé en ce que** l'étape (a) consiste à enrouler un fil sur une préforme d'ébauche et surmouler la préforme d'ébauche avec une couche de matériau plastique pour ainsi former le raccord par électrofusion primaire (101, 201, 301).

13. Procédé selon la revendication 9 ou 10, **caractérisé en ce que** le raccord par électrofusion primaire (101, 201, 301) est formé à partir d'un raccord par électrofusion standard à partir duquel les protections et bornes verticales ont été retirées.

14. Procédé selon l'une quelconque des revendications 9 à 13, **caractérisé en ce que**, lorsque le raccord par électrofusion primaire (301) est un joint en T, le raccord par électrofusion primaire est formé à partir d'un raccord par électrofusion standard à partir duquel les protections et bornes verticales ont été retirées et dans lequel le bout mâle simple a été remplacé avec un convertisseur d'électrofusion pour créer un T à trois voies par électrofusion.

15. Procédé pour joindre les sections d'extrémité de deux sections de conduite de confinement secondaire ou plus, le procédé comprenant les étapes suivantes :
(a) insérer la conduite intérieure (111, 211, 311) d'une section de conduite de confinement secondaire dans l'embouchure du raccord par électrofusion primaire (101, 201, 301) du joint selon l'une quelconque des revendications 1 à 8 ;
(b) souder par électrofusion le raccord par électrofusion primaire à la conduite intérieure (111, 211, 311) ;
(c) fournir sur la surface extérieure de l'embouchure du raccord secondaire (106, 206, 306) du joint selon l'une quelconque des revendications 1 à 8 un raccord réducteur par électrofusion (113, 213, 313) possédant une première extrémité adaptée pour recevoir la surface extérieure de l'embouchure et une seconde extrémité adaptée pour recevoir le diamètre extérieur de l'extrémité du tuyau extérieur (112, 212, 312) de la section de conduite de confinement secondaire ;
(d) insérer le tuyau extérieur (112, 212, 312) de la section de conduite de confinement secondaire dans l'extrémité du raccord réducteur ainsi adapté ; et
(e) souder par électrofusion le raccord réducteur par électrofusion respectivement et souder par électrofusion le raccord réducteur par électrofusion à la seconde conduite extérieure de la section de conduite de confinement secondaire et la surface extérieure du raccord surmoulé secondaire.

16. Procédé de fabrication de joints par électrofusion, le procédé comprenant les étapes suivantes :
(a) former une préforme d'ébauche à l'aide d'un outil de moulage par injection dédié ;
(b) enrouler une bobine de fil de résistance sur la préforme pour fournir un raccord par électrofusion primaire ;
(c) surmouler la préforme enroulée de l'étape (b) avec une couche de matériau thermoplastique dans un deuxième outil de moulage par injection dédié pour former le raccord par électrofusion primaire fini (101, 201, 301) ;
(d) retirer la protection et la borne verticales du raccord par électrofusion primaire ;
(e) traiter la surface extérieure du raccord par électrofusion primaire pour la rendre non adhérente à une couche surmoulée ;
(f) surmouler la surface traitée du raccord par électrofusion primaire avec une seconde couche extérieure dans un troisième outil de moulage par injection dédié, pour ainsi fournir un raccord secondaire (106, 206, 306) qui entoure et est en contact avec le raccord par électrofusion primaire, le troisième outil de moulage par injection dédié étant configuré avec des centres qui créent un canal d'écoulement à l'intérieur de la section de paroi de la couche extérieure secondaire ;
(g) fixer des bornes horizontales au fil de résistance du raccord primaire intérieur pour ainsi faciliter l'électrofusion de la section de conduite intérieure au raccord par électrofusion primaire du joint.

17. Procédé pour former un joint de conduite de confinement secondaire selon la revendication 9 ou 10, **caractérisé en ce que** l'étape (a) consiste à enrouler un fil pour former une bobine de fil de résistance directement dans l'alésage de la partie d'embouchure du raccord primaire produit sans préforme.

18. Procédé pour former un joint de conduite de confinement secondaire selon l'une quelconque des revendications 9 ou 10, **caractérisé en ce que** l'étape (a) consiste à enrouler une bobine de fil de résistance directement sur le centre qui forme la partie d'embouchure du raccord par électrofusion primaire et puis surmouler la bobine de fil pour former le raccord par électrofusion primaire.

19. Procédé selon l'une quelconque des revendications 9 à 12, 17 ou 18, **caractérisé en ce que** le raccord par électrofusion primaire (301) est un joint en T formé à partir d'un T à trois voies par électrofusion standard.

20. Procédé selon l'une quelconque des revendications 9 à 12, 17 ou 18, **caractérisé en ce que**, lorsque le raccord par électrofusion primaire (101, 201) est un coupleur droit, le coupleur droit peut être inséré dans un manchon moulé secondaire possédant des nervures d'espacement internes possédant un diamètre interne coïncidant avec le diamètre externe du coupleur droit primaire, le manchon moulé possède une surface extérieure et un canal de passage d'écoulement est développé entre la surface extérieure du manchon secondaire et la surface extérieure du coupleur droit primaire.
